# EUROPÄISCHE PATENTANMELDUNG

(11) **EP 0 944 196 A2**
(43) Veröffentlichungstag der Anmeldung: **22.09.1999**
(21) Anmeldenummer: 99101308.7
(22) Anmeldetag: 25.01.1999
(51) Int. Cl.: H04J 3/16, H04M 11/06

(54) **Einrichtung zur Übertragung von Sprachsignalen und/oder Telefaxsignalen**

(30) Priorität: 17.03.1998 DE 19811518
(71) Anmelder: ROBERT BOSCH GMBH, 70442 Stuttgart (DE)
(72) Erfinder: Behrendt, Thomas, 47877 Willich (DE)

(57) **Zusammenfassung**

Bei einer Einrichtung zur Übertragung von Sprachsignalen und/oder Telefaxsignalen zwischen an ein Telekommunikationsnetz angeschlossenen Telekommunikationsanlagen sind den Telekommunikationsanlagen Multiplexer/Demultiplexer zugeordnet, deren Demultiplex-Seite mehrere komprimierte Sprachsignale und/oder Telefaxsignale von der jeweiligen Telekommunikationsanlage zuführbar bzw. für die jeweilige Telekommunikationsanlage abnehmbar sind und deren Multiplex-Seite mit einem Teilnehmeranschluß des digitalen Telekommunikationsnetzes verbindbar ist.

## Beschreibung

Die Erfindung betrifft eine Einrichtung zur Übertragung von Sprachsignalen und/oder Telefaxsignalen zwischen an ein Telekommunikationsnetz angeschlossenen Telekommunikationsanlagen.

Zwischen mehreren Telekommunikationsanlagen, die an ein öffentliches Telekommunikationsnetz angeschlossen sind, werden häufig Querverbindungen geschaffen, um eine schnelle Kommunikation zwischen den Teilnehmern der einzelnen Anlagen zu ermöglichen. Dazu werden in der Regel Standleitungen gemietet, die von den Teilnehmern der Telekommunikationsanlage durch Vorwahl von dazu festgelegten Kennziffern benutzt werden können. Insbesondere bei großen Entfernungen zwischen den einzelnen Telekommunikationsanlagen sind diese Standleitungen teuer. Außerdem ist es häufig nicht möglich, die Kapazität dieser Standleitungen wirtschaftlich an das wechselnde Verkehrsaufkommen zwischen den Telekommunikationsanlagen anzupassen.

Aufgabe der vorliegenden Erfindung ist es daher, eine Einrichtung anzugeben, mit welcher Sprachsignale und/oder Telefaxsignale kostengünstig zwischen einzelnen Telekommunikationsanlagen übertragen werden können.

Diese Aufgabe wird erfindungsgemäß dadurch gelöst, daß den Telekommunikationsanlagen Multiplexer/Demultiplexer zugeordnet sind, deren Demultiplex-Seite mehrere komprimierte Sprachsignale und/oder Telefaxsignale von der jeweiligen Telekommunikationsanlage zuführbar bzw. für die jeweilige Telekommunikationsanlage abnehmbar sind und deren Multiplex-Seite mit einem Teilnehmeranschluß des digitalen Telekommunikationsnetzes verbindbar ist.

Die erfindungsgemäße Einrichtung eignet sich zur Übertragung über Wählverbindungen, wobei nur Gebühren für die jeweilige Verbindung anfallen und außerdem mehrere unabhängige Sprachsignale und/oder Telefaxsignale gleichzeitig übertragen werden können. So können beispielsweise über einen Kanal des ISDN drei Querverbindungen geschaltet werden. Die erfindungsgemäße Einrichtung ist jedoch auch für Festverbindungen geeignet, wobei deren Effektivität drastisch gesteigert werden kann. Bei einer 2MBit/s-Festverbindung können beispielsweise 90 unabhängige Sprach- oder Telefaxverbindungen gleichzeitig bestehen.

Eine vorteilhafte Ausgestaltung der erfindungsgemäßen Einrichtung besteht darin, daß der Demultiplex-Seite ferner eine interne Signalisierung zuführbar bzw. abnehmbar ist, welche die Weiterleitung der Sprachsignale und/oder der Telefaxsignale in den Telekommunikationsanlagen betrifft und daß eine Einrichtung für eine externe Signalisierung für das Telekommunikationsnetz mit dem Teilnehmeranschluß verbindbar ist. Durch die interne Signalisierung, die beispielsweise bei einem 64-kBit/s-Kanal außer drei nach ITU G.728 komprimierten Sprachsignalen die interne Signalisierung Telekommunikationsanlagen eingesetzt werden, beispielsweise das sogenannte TNET-Protokoll der BOSCH Telecom GmbH. Während der gesamten Verbindungsdauer steht der "getunnelte" Signalisierungskanal transparent zur Verfügung.

Bei der vorteilhaften Ausgestaltung kann insbesondere vorgesehen sein, daß die Einrichtung zur Signalisierung für das Telekommunikationsnetz einen digitalen Teilnehmer nachbildet und im Telekommunikationsnetz den Dienst Datenübertragung (unrestricted digital information) bucht. Damit ist sichergestellt, daß kein Datenverlust innerhalb des Telekommunikationsnetzes entsteht - beispielsweise durch Sonderbitbelegung oder Sprachkompression innerhalb des Telekommunikationsnetzes.

Ferner ist bei der erfindungsgemäßen Einrichtung vorzugsweise vorgesehen, daß die Sprachsignale und/oder Telefaxsignale jeweils über einen Fort vom Typ "Basic Access" als digitale Querverbindung (Basic Access VLN) zuführbar bzw. abnehmbar sind. Die Simulation des digitalen Teilnehmers ist vorzugsweise als Fort vom Typ "Basic Access" als digitaler Teilnehmer (DITN) zuführbar bzw. abnehmbar. Damit ist sichergestellt, daß keine Änderungen in der Vermittlungssoftware notwendig sind.

Eine weitere vorteilhafte Ausgestaltung der erfindungsgemäßen Einrichtung besteht darin, daß für die Sprachsignale eine Kompression nach ITU G.728 von 64 kBit/s auf 16 kBit/s vorgesehen ist. Damit können bekannte und bewährte Verfahren und Bausteine zur Kompression verwendet werden. Außerdem ergibt sich bereits eine dreifache Ausnutzung jeweils einer Querverbindung, wozu gemäß einer Weiterbildung vorgesehen ist, daß jeweils einem Multiplexer/Demultiplexer drei Sprachsignale und/oder Telefaxsignale und Signalisierungssignale zuführbar bzw. abnehmbar sind und daß der Teilnehmeranschluß ein Anschluß eines digitalen Wählnetzes (ISDN) ist.

Eine andere Weiterbildung der erfindungsgemäßen Einrichtung besteht darin, daß mit Hilfe der Signalisierung für das Telekommunikationsnetz bei Eintreffen eines Verbindungswunsches mit einem Teilnehmer einer anderen Telekommunikationsanlage (Querverbindung) eine Wählverbindung zur anderen Telekommunikationsanlage aufgebaut wird, daß bei Bedarf weitere Sprachsignale und/oder Telefaxsignale über die Wählverbindung übertragen werden und daß die Wählverbindung nach Auslösung der letzten Querverbindung ebenfalls ausgelöst wird. Dadurch ist gewährleistet, daß eine einmal aufgebaute Wählverbindung bei Bedarf für weitere Querverbindungen genutzt wird. Dabei ist nicht ausgeschlossen, daß bei einem erhöhten Bedarf weitere Wählverbindungen geschaltet werden.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer erfindungsgemäßen Einrichtung und
- Fig. 2: ebenfalls als Blockschaltbild eine Vernetzung von drei Telekommunikationsanlagen.

Gleiche Teile sind in den Figuren mit gleichen Bezugszeichen versehen.

Das Ausführungsbeispiel sowie Teile davon sind zwar als Blockschaltbilder dargestellt. Dieses bedeutet jedoch nicht, daß die erfindungsgemäße Einrichtung auf eine Realisierung mit Hilfe von einzelnen den Blöcken entsprechenden Schaltungen beschränkt ist. Die erfindungsgemäße Einrichtung ist vielmehr in besonders vorteilhafter Weise mit Hilfe von hochintegrierten Schaltungen realisierbar. Dabei können digitale Signalprozessoren eingesetzt werden, welche bei geeigneter Programmierung die in den Blockschaltbildern dargestellten Verarbeitungsschritte durchführen.

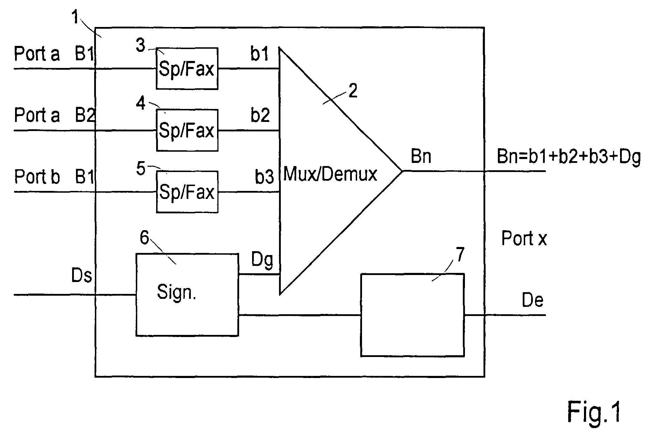

Die in Fig. 1 dargestellte erfindungsgemäße Einrichtung 1 weist einen Multiplexer/Demultiplexer 2 auf. An der Demultiplex-Seite sind vier Ports (Ein/Ausgänge), von denen drei jeweils mit einem Komprimierer bzw. Dekomprimierer für Sprachsignale 3, 4, 5 verbunden sind. Die Komprimierer bzw. Dekomprimierer sind abschaltbar und erkennen selbsttätig, wenn Faxsignale anliegen. Die Faxsignale werden nicht komprimiert bzw. dekomprimiert, sondern durch eine Remodulierung des Faxsignals mit einer Bitrate von maximal 9200 übertragen.

Die Komprimierer/Dekomprimierer 3, 4, 5 weisen jeweils einen Port auf, und zwar einen Port a mit zwei Nutzkanälen B1 und B2 und einen Port b mit einem Nutzkanal B1. Die Ports sind vom Typ Basic Access VLN ausgeführt, so daß sie innerhalb einer Telekommunikationsanlage mit den bestehenden Programmen und Hardware-Einrichtungen bedient werden können. Ein weiterer Port dient der Signalisierung Ds, wobei in einer Einrichtung 6 eine interne Signalisierung Dg abgeleitet und dem Multiplexer/Demultiplexer 2 zugeführt wird bzw. in Gegenrichtung dem Multiplexer/Demultiplexer 2 entnommen wird. Diese interne Signalisierung Dg wird innerhalb des vom Multiplexer/Demultiplexer gebildeten Nutzkanals Bn transparent übertragen und dient zur Steuerung des Gesprächsaufbaus bzw. der Gesprächsauslösung zwischen Teilnehmern der Telekommunikationsanlagen, die mit der erfindungsgemäßen Einrichtung verbunden werden sollen bzw. verbunden sind.

Im übrigen setzt sich der Nutzkanal Bn aus komprimierten Kanälen b1+b2+b3 zusammen. Dem Nutzkanal zugeordnet ist ein Signalisierungskanal De für die Signalisierung mit dem Telekommunikationsnetz. Dazu ist bei 7 ein digitaler Teilnehmer nachgebildet, der beim Aufbau einer Wählverbindung über das Telekommunikationsnetz den Dienst Daten (unrestricted digital information) bucht, damit eine unverfälschte transparente Übertragung des Multiplexsignals Bn sichergestellt ist.

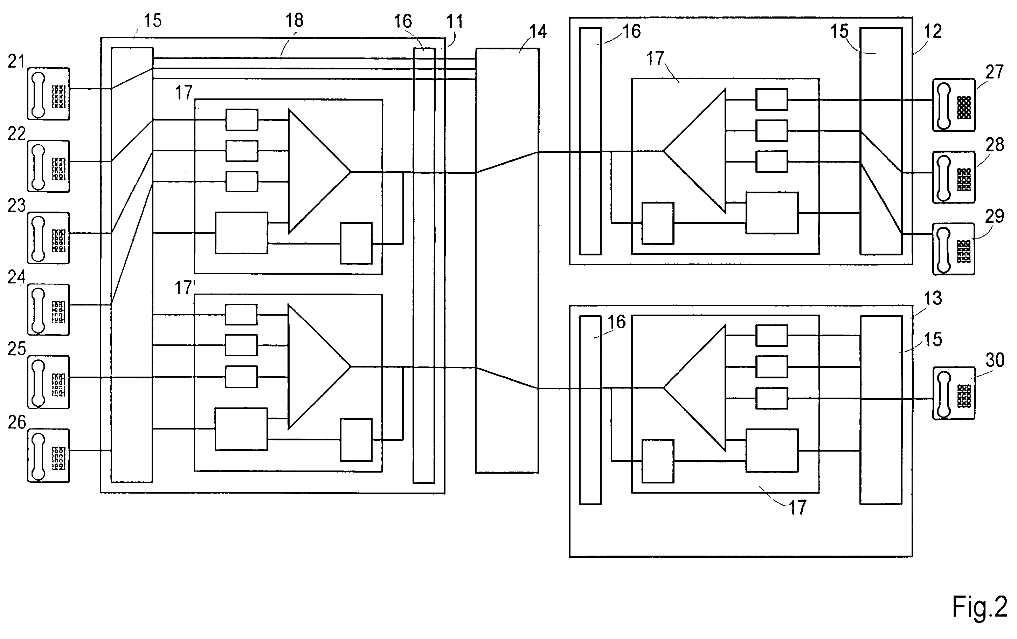

Fig. 2 zeigt ebenfalls als Blockschaltbild drei Telekommunikationsanlagen 11, 12, 13, die mit einem Telekommunikationsnetz 14 verbunden sind. Von den Telekommunikationsanlagen 11, 12, 13 sind schematisch nur einige Teile dargestellt, soweit es zur Erläuterung der Erfindung erforderlich ist. Diese sind jeweils ein Teilnehmeranschlußorgan 15, ein Amtsanschlußorgan 16 und eine - bzw. im Falle der Telekommunikationsanlage 11 zwei - erfindungsgemäße Einrichtungen 17, 17'. Von den an die Telekommunikationsanlagen 11, 12, 13 angeschlossenen Endgeräten sind lediglich Telefone 21 bis 30 dargestellt.

In an sich bekannter Weise sind mit Hilfe der Teilnehmeranschlußorgane 15 Verbindungen der Telefone 21 bis 30 untereinander und über sogenannte Amtsleitungen 18 mit anderen Teilnehmern am Telekommunikationsnetz 14 möglich. Letzteres ist beispielhaft am Telefon 21 dargestellt. Die Telefone 22, 23, 24 sind jeweils mit einem Port der Einrichtung 17 verbunden, die eine Dreifach-Querverbindung mit der Telekommunikationsanlage 12 hält, wobei Gespräche mit den Telefonen 27, 28, 29 bestehen. In dem dargestellten Zustand wird von den drei Kanälen der Einrichtungen 17' und 17 der Telekommunikationsanlagen 11 und 13 lediglich ein Kanal, nämlich zwischen den Telefonen 25 und 30 genutzt.

## Patentansprüche

1. Einrichtung zur Übertragung von Sprachsignalen und/oder Telefaxsignalen zwischen an ein Telekommunikationsnetz angeschlossenen Telekommunikationsanlagen, dadurch gekennzeichnet, daß den Telekommunikationsanlagen Multiplexer/Demultiplexer (2) zugeordnet sind, deren Demultiplex-Seite mehrere komprimierte Sprachsignale und/oder Telefaxsignale von der jeweiligen Telekommunikationsanlage (11, 12, 13) zuführbar bzw. für die jeweilige Telekommunikationsanlage (11, 12, 13) abnehmbar sind und deren Multiplex-Seite mit einem Teilnehmeranschluß des digitalen Telekommunikationsnetzes (14) verbindbar ist.

2. Einrichtung nach Anspruch 1, dadurch gekennzeichnet, daß der Demultiplex-Seite ferner eine interne Signalisierung zuführbar bzw. abnehmbar ist, welche die Weiterleitung der Sprachsignale und/oder der Telefaxsignale in den Telekommunikationsanlagen (11, 12, 13) betrifft und daß eine Einrichtung (7) für eine externe Signalisierung für das Telekommunikationsnetz (14) mit dem Teilnehmeranschluß verbindbar ist.

3. Einrichtung nach Anspruch 2, dadurch gekennzeichnet, daß die Einrichtung (7) zur Signalisierung für das Telekommunikationsnetz einen digitalen Teilnehmer nachbildet und im Telekommunikationsnetz den Dienst Datenübertragung bucht.

4. Einrichtung nach einem der vorhergehenden Ansprüche, dadurch gekennzeichnet, daß die Sprachsignale und/oder Telefaxsignale jeweils über einen Port vom Typ "Basic Access VLN" zuführbar bzw. abnehmbar sind.

5. Einrichtung nach einem der vorhergehenden Ansprüche, dadurch gekennzeichnet, daß für die Sprachsignale eine Kompression nach ITU G.728 von 64 kBit/s auf 16 kBit/s vorgesehen ist.

6. Einrichtung nach einem der vorhergehenden Ansprüche, dadurch gekennzeichnet, daß die Simulation des digitalen Teilnehmers vorzugsweise als Port vom Typ "Basic Access" als digitaler Teilnehmer (DITN) zuführbar bzw. abnehmbar ist.

7. Einrichtung nach einem der vorhergehenden Ansprüche, dadurch gekennzeichnet, daß jeweils einem Multiplexer/Demultiplexer drei Sprachsignale und/oder Telefaxsignale und Signalisierungssignale zuführbar bzw. abnehmbar sind und daß der Teilnehmeranschluß ein Anschluß eines digitalen Wählnetzes (ISDN) (14) ist.

8. Einrichtung nach Anspruch 2, dadurch gekennzeichnet, daß mit Hilfe der Signalisierung für das Telekommunikationsnetz (14) bei Eintreffen eines Verbindungswunsches mit einem Teilnehmer einer anderen Telekommunikationsanlage (12, 13) (Querverbindung) eine Wählverbindung zur anderen Telekommunikationsanlage (12, 13) aufgebaut wird, daß bei Bedarf weitere Sprachsignale und/oder Telefaxsignale über die Wählverbindung übertragen werden und daß die Wählverbindung nach Auslösung der letzten Querverbindung ebenfalls ausgelöst wird.
